# EUROPEAN PATENT APPLICATION

(11) **EP 2 132 982 A2**
(43) Date of publication of application: **16.12.2009**
(21) Application number: 09162340.5
(22) Date of filing: 10.06.2009
(51) Int. Cl.: A01K 1/01, A01K 1/02, A01K 1/03

(54) **Pet toilet equipped with means for the ventilation and filtering of odours**

(30) Priority: 11.06.2008 IT VR20080066
(71) Applicant: FERPLAST S.P.A., 36070 Castelgomberto (IT)
(72) Inventor: Vaccari, Carlo, 36070, Castelgomberto (VI) (IT)
(74) Representative: Petraz, Gilberto Luigi

(57) **Abstract**

A toilet for pets such as cats, dogs or the like, this toilet consisting of a closed box-like container (10), obtained by coupling two half-shells (11, 12), reciprocally held together along a coupling and closing border (13), the upper part of the toilet comprising a grid equipped with specific housings to accommodate activated carbon filtering elements, while the front part is fitted with an opening which is closed by a door (14), in which the side walls of at least the lower part are equipped with at least one cavity (16) which allows air to enter through lower inlets (17) and to pass through inner outlets (18) positioned for example at the level of the mid coupling line (13), and in which the flow of air which enters through the outer inlet (17) and passes through the inner outlet (18) flows naturally upwards, exiting through the upper grid (15) already purified, having passed through the activated carbon filters, this air flow being made effective by the airtight seal of the door (14) equipped with special seals.

## Description

### TECHNICAL FIELD

This invention concerns a toilet for pets, in particular cats, dogs or similar, which is equipped with means for the ventilation and filtering of unpleasant odours.

More specifically, this invention refers to a toilet for pets, in particular cats and dogs, which ensures efficient anti-odour action due to a new system for the ventilation and filtering of odours.

The odour-filtering system according to the invention foresees the creation, inside the toilet, of air circulation by exploiting a "chimney effect", achieved by a particular cavity in the walls working in conjunction with the front door, which is equipped with a seal which closes the gaps between the door and the frame to prevent the odours from escaping outwards.

The air inside the toilet is filtered by a large filtering surface on the upper surface and consisting of a number of activated carbon filters.

This invention can be applied in the field of components and accessories for pets, in particular in the sector of toilets for dogs and cats.

### BACKGROUND ART

Various types of cleanable toilets for pets, in particular for cats, but also dogs and the like, are known to exist.

It is also known that a cat easily becomes accustomed to using the same place as its toilet, but at the same time this toilet must also satisfy the requirements dictated by the cat's instincts and needs.

A toilet for cats must therefore have two main characteristics: in the first place it must contain a litter of sandy material, providing warmth and comfort thus making it desirable to the animal and also, and particularly in the case of a toilet to be kept inside a closed domestic environment, that is to say in city apartments without balconies or terraces, it is important for the toilet to be equipped with a device designed to absorb the odour caused by the cat's body waste products, which is notoriously very unpleasant.

Traditional toilets for cats normally consist of a tray, the bottom of which is covered with sandy material several centimetres thick which acts as a litter, on which the cat deposits its body waste products.

This material is regularly replaced, once it has been used, with clean sandy material.

It is also necessary to wash and clean the container which inevitably becomes dirty on contact with the used sandy material.

This hygiene aspect becomes particularly important when these toilets are kept inside houses or apartments.

Studies have therefore been carried out leading to the design of toilets consisting of a closed container, the lower part of which contains the sand to collect the cat's body waste products.

The use of the closed type toilet has solved the problem of the dispersion of odours in closed environments, but has highlighted another problem: the stagnation of odours inside the toilet itself, something which irritates the cat and often means that the toilet is not used.

A number of odour-eliminating systems have therefore been designed, mainly based on the presence of a grid in the upper part of the cover. In some cases the grid is equipped with an activated carbon filter.

The use of such systems has only partially resolved the problem of unpleasant odours inside closed toilets, but their efficacy is limited by the lack of an adequate ventilation system. Additional problems are the loss of efficacy of these filters after a certain period of use and the presence of openings, for example at the door, which allow the odours to escape.

### DESCRIPTION OF THE INVENTION

This invention proposes to provide a toilet for pets, in particular cats, dogs or the like, which can eliminate or at least reduce the problems described above.

The invention does in fact propose to provide a toilet for cats, dogs or the like which is very simple in design and which can be equipped with a "natural" ventilation system that allows odours to escape, preventing them from stagnating inside the structure.

This is achieved by means of a toilet for cats or the like, with the features described in the main claim.

The dependent claims of the solution in question describe advantageous embodiments of the invention.

The main advantages of this solution, in addition to those deriving from its construction simplicity, concern first of all the fact that the problem of odour stagnation is solved by the creation of a system of natural ventilation, with the formation of air flows which enter the toilet from outside and exit from the upper part through the grid equipped with activated carbon filters.

The toilet according to the invention is designed and constructed in such a way as to offer the considerable advantage of not allowing the odours to escape through gaps and spaces created by the various parts making up the toilet. This is made possible because the connections are constructed in such a way as to guarantee an excellent seal, more or less like an airtight system.

With this new "sealed" system, the air entering the structure thus has only one escape route: the large upper activated carbon filtering surface on the cover.

### DESCRIPTION OF THE DRAWINGS

Other features and advantages of the invention will become evident on reading the description given below of one embodiment of the invention, given as a non-binding example, with the help of the accompanying drawings, in which:
- figure 1 shows a schematic and prospective view of the overall toilet according to the invention;

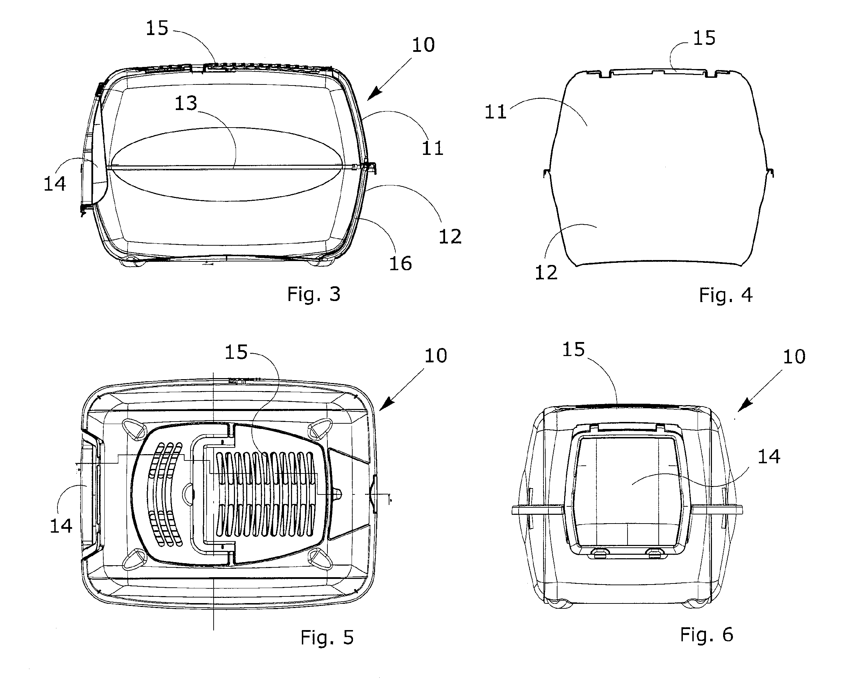

- figures 2 and 3 are schematic cross-section views of the toilet according to the invention;
- figure 4 shows a schematic cross-section view of the short side of the toilet;
- figure 5 is a schematic plan view of the toilet;
- figure 6 is a schematic view of the toilet from the front and showing the access door;
- figure 7 is a schematic vertical cross-section view of part of the toilet, showing the flow of air entering through the wall cavity and exiting through the upper grid.

### DESCRIPTION OF ONE EMBODIMENT OF THE INVENTION

With reference to the accompanying drawings, the toilet according to the invention substantially comprises a closed box-like container 10 consisting, in the case in question, of two half-shells 11 and 12, reciprocally held together along a coupling and closing border 13.

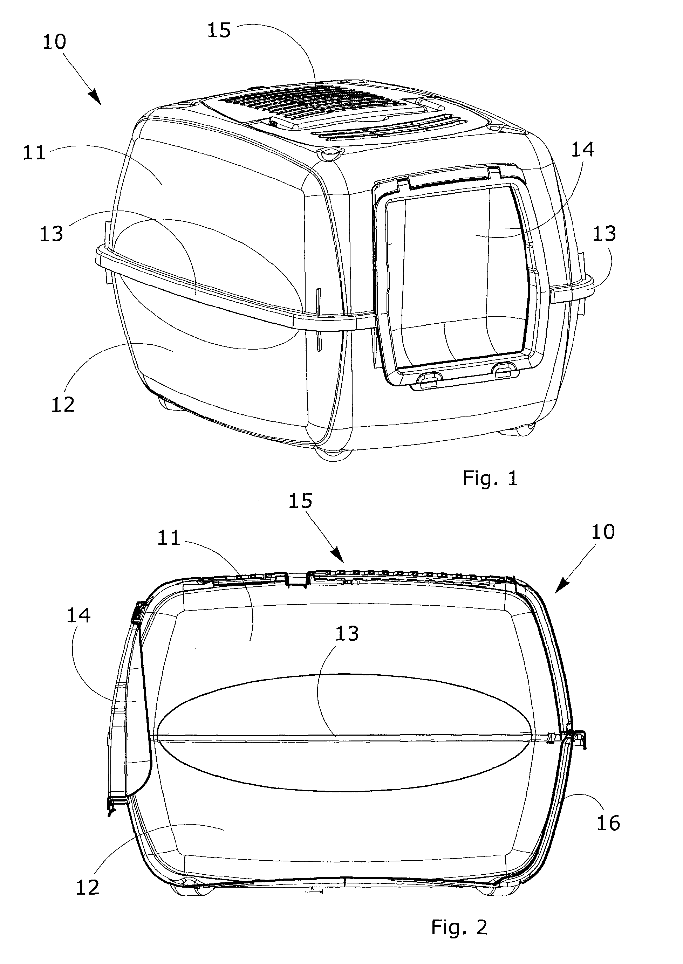

With reference first of all to figure 1 it can be observed that the toilet according to the invention presents a substantially parallelepiped prismatic shape with chamfered edges and rounded lines, although it can have any shape and design. In the front part is an opening which is closed by a door 14.

The upper part of the toilet comprises a grid equipped with specific housings to accommodate activated carbon filtering elements.

The feature which characterises this invention is the particular construction of the side walls which are equipped with at least one cavity 16 which allows air to enter through lower inlets 17 and to pass through inner outlets 18 positioned for example at the level of the mid coupling line 13.

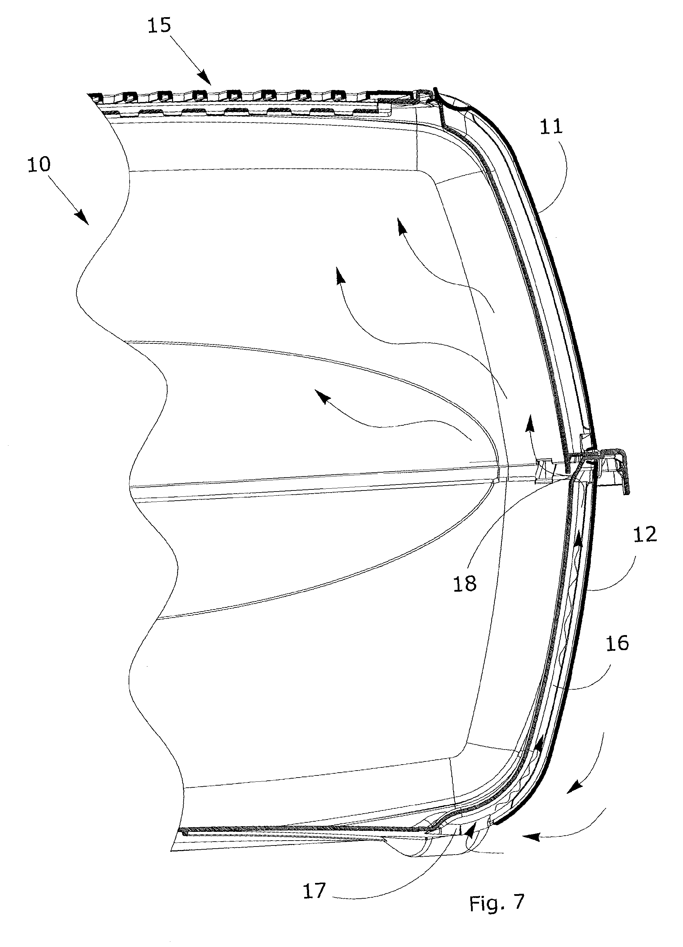

As shown in particular in figure 7, the flow of air which enters through the outer inlet 17 and passes through the inner outlet 18 flows naturally upwards, exiting through the upper grid 15 already purified, having passed through the activated carbon filters.

This air flow is guaranteed by the airtight seal of the door 14, which is equipped with special seals which cause the air to flow directly from the base towards the roof of the toilet, permitting a drastic reduction of the odours both inside and outside the structure.

The large activated carbon filtering surface 19 on the roof of the toilet below the grid 15 and in contact with it neutralises the odorous particles.

The advantage of the toilet according to the invention is that the odours cannot escape through gaps and spaces created by the various parts which make up the toilet, since the couplings are made in such a way as to guarantee an excellent seal, almost an airtight system. The air entering the toilet thus has only one escape route, the large activated carbon filtering surface.

The particular design and shape of this toilet make it possible to obtain the described filtering and purifying effect without the need to use forced air conveyance means.

The invention is described above with reference to a preferred embodiment. It is nevertheless clear that the invention is susceptible to numerous variations which lie within its scope, within the framework of technical equivalents.

## Claims

1. A toilet for pets such as cats, dogs or the like, this toilet consisting of a closed box-like container (10), obtained by coupling two half-shells (11, 12), reciprocally held together along a coupling and closing border (13), the upper part of the toilet comprising a grid equipped with specific housings to accommodate activated carbon filtering elements, while the front part is fitted with an opening which is closed by a door (14), **characterised in that** the side walls of at least the lower part are equipped with at least one cavity (16) which allows air to enter through lower inlets (17) and to pass through inner outlets (18) positioned for example at the level of the mid coupling line (13), and **in that** the flow of air which enters through the outer inlet (17) and passes through the inner outlet (18) flows naturally upwards, exiting through the upper grid (15) already purified, having passed through the activated carbon filters, this air flow being made effective by the airtight seal of the door (14) equipped with special seals.

2. A toilet for pets such as cats, dogs or the like, according to the previous claim, **characterised in that** the flow of air is guaranteed by the airtight seal of the door (14), which is equipped with special seals which cause the air to flow directly from the base towards the roof of the toilet, permitting a drastic reduction of the odours both inside and outside the structure.

3. A toilet for pets such as cats, dogs or the like, according to either of the previous claims, **characterised in that** the large activated carbon filtering surface (19) positioned on the roof of the toilet below the grid (15) and in contact with it neutralises the odorous particles.

4. A toilet for pets such as cats, dogs or the like, according to any of the previous claims, **characterised in that** the odours cannot escape through gaps and spaces created by the various parts which make up the toilet, since the couplings are made in such a way as to guarantee an excellent seal, almost an airtight system, and the air entering the toilet thus has only one escape route, the large activated carbon filtering surface (15).

5. A toilet for pets such as cats, dogs or the like, according to any of the previous claims, **characterised in that** the particular design and shape of this toilet makes it possible to obtain the described filtering and purifying effect without the need to use forced air conveyance means.
